# EUROPÄISCHE PATENTANMELDUNG

(11) **EP 2 204 266 A1**
(43) Veröffentlichungstag der Anmeldung: **07.07.2010**
(21) Anmeldenummer: 09180733.9
(22) Anmeldetag: 24.12.2009
(51) Int. Cl.: B25B 27/02, B23P 19/02

(54) **Vorrichtung und Verfahren zur Montage und Demontage einer Profilwelle mit bzw. von einer Gelenkgabel einer Kreuzgelenkwelle**

(30) Priorität: 06.01.2009 DE 102009004139
(71) Anmelder: Siemer, Alfred, 26689 Godensholt (DE)
(72) Erfinder: Siemer, Alfred, 26689 Godensholt (DE)
(74) Vertreter: Müller, Thomas Michael

(57) **Zusammenfassung**

Vorrichtung zur Montage oder Demontage einer Profilwelle 7 mit bzw. von einer Gelenkgabel 8 einer Kreuzgelenkwelle, umfassend
eine erste Halteeinrichtung 10 zur fixierenden Aufnahme der Profilwelle ,
eine zweite Halteeinrichtung 20 zur Aufnahme der Gelenkgabel,
einen Kraftantrieb 13,
wobei zumindest eine der Halteeinrichtungen mittels des Kraftantriebs entlang einer Längsachse X der fixierten Profilwelle relativ zu der anderen Halteeinrichtung verstellbar ist.

## Beschreibung

Die Erfindung betrifft eine Vorrichtung und ein Verfahren zur Montage oder Demontage einer Profilwelle mit bzw. von einer Gelenkgabel einer Kreuzgelenkwelle.

Bei Gelenkwellen, die zum Antrieb von landwirtschaftlichen Geräten Einsatz finden, sind bei Verschleiß Bauteile der Gelenkwelle auszutauschen. Die Gelenkwelle umfasst beispielsweise zwei Kreuzgelenke, die durch eine Verbindungswelle, die teleskopierbar ist, miteinander verbunden sind. Bei der Verbindungswelle handelt es sich beispielsweise um zwei profilierte Rohre, die ineinander gesteckt sind. Jede der beiden Profilwellen ist mit einer Gelenkgabel des zugehörigen Kreuzgelenks verbunden. Um ein Gelenk oder eine Profilwelle austauschen zu können, muss die Verbindung zwischen einer Gelenkgabel und der Profilwelle gelöst werden. Beide Bauteile sind so formschlüssig miteinander verbunden, dass sie ein Drehmoment übertragen können. Dazu weist die Gelenkgabel eine an den Querschnitt der Profilwelle angepasste Ausnehmung auf, mit der sie auf der Profilwelle montiert werden kann. Die Montage erfolgt durch Aufpressen der Gelenkgabeln auf die Profilwelle mittels eines entsprechenden Montagewerkzeugs. Die Demontage dieser Presspassung erfolgt durch Abziehen der Gelenkgabel von der Profilwelle.

Ein solches Montagewerkzeug ist beispielsweise aus der Druckschrift DE 299 19 426 U1 bekannt. Die Vorrichtung weist Spannbacken zum Halten des Montagewerkzeugs auf der Profilwelle und ein relativ dazu verschwenkbares Beaufschlagungselement auf, wobei die Kraft zum Aufpressen bzw. Abziehen der Gelenkgabel durch ein Kraftmittel erzeugt wird, welches zwischen den Spannbacken und dem Beaufschlagungselement wirkt. Ein Nachteil dieser Vorrichtung besteht darin, dass durch die schwenkbare Lagerung des Beaufschlagungselements das Einbringen von Querkräften bzw. Kippmomenten bei der Montage nicht ausgeschlossen werden kann. Dadurch besteht die Gefahr, die Lagersitze der Profilgabel zu beschädigen. Darüber hinaus ist die kraftmittelunterstützte Betätigung des schwenkbaren Beaufschlagungselements vergleichsweise unhandlich.

Ein Aufgabe der Erfindung besteht darin, eine Vorrichtung zur Montage oder Demontage einer Profilwelle mit bzw. von einer Gelenkgabel einer Kreuzgelenkwelle zur Verfügung zu stellen, welche einfach bedienbar ist und welche ermöglicht, die Einwirkung von Querkräften auf die Lagersitze der Profilwelle und/oder der Gelenkgabel bei der Montage und/oder Demontage zu minimieren.

Die Aufgabe wird gelöst durch die Gegenstände der unabhängigen Patentansprüche. Die erfindungsgemäße Vorrichtung zur Montage oder Demontage einer Profilwelle mit einer Gelenkgabel einer Kreuzgelenkwelle umfasst eine erste Halteeinrichtung zur fixierenden Aufnahme der Profilwelle, eine zweite Halteeinrichtung zur Aufnahme der Gelenkgabel, sowie einen Kraftantrieb. Erfindungsgemäß ist zumindest eine der Halteeinrichtungen mittels des Kraftantriebs entlang einer Längsachse des Profilrohrs relativ zu der anderen Halteeinrichtung verstellbar. Unter der Verstellung entlang der Längsachse ist im Sinne der Erfindung eine im wesentlichen geradlinige Verstellbewegung zu verstehen. Das Auftreten von Querkräften, welche zur Beschädigung der Lagersitze der Gelenkgabel führen können, wird vorteilhaft vermieden oder zumindest minimiert.

Gemäß einer bevorzugten Ausführungsform der erfindungsgemäßen Vorrichtung weist die erste Halteeinrichtung zumindest zwei Klemmbereiche auf, wobei die Klemmbereiche entlang der Längsachse der fixierten Profilwelle voneinander beabstandet angeordnet sind. Durch eine Fixierung der Profilwelle in mindestens zwei verschiedenen Klemmbereichen ist die Lage der Profilwelle relativ zu der erfindungsgemäßen Vorrichtung sehr genau bestimmt. Ein Verkanten von Profilwelle und Gelenkgabel bei der Montage kann so vorteilhaft vermieden werden. Unter der Längsachse der fixierten Profilwelle ist eine zu der erfindungsgemäßen Vorrichtung ortsfest angeordnete Achse zu verstehen, welche bei in der ersten Halteeinrichtung fixierter Profilwelle mit der Längsachse der Profilwelle übereinstimmt.

Gemäß einer bevorzugten Ausführungsform der erfindungsgemäßen Vorrichtung ist ein Grundgestell vorgesehen, welches die Halteeinrichtungen trägt, wobei besonders bevorzugt die zumindest eine verstellbare Halteeinrichtung auf einem Schlitten angeordnet ist, der beispielsweise an dem Grundgestell verschiebbar geführt ist. Weiterhin bevorzugt ist zumindest eine Kolben-Zylinder-Einheit vorgesehen, die einerseits gegen den Schlitten und andererseits gegen das Grundgestell abgestützt ist. Besonders bevorzugt ist die Kolben-Zylinder-Einheit ein doppelt wirkender Hydraulikzylinder. Dadurch ist vorteilhaft eine Montage und eine Demontage von Profilwelle und Gelenkgabel durch Aufpressen beziehungsweise Abziehen besonders einfach möglich.

Vorzugsweise weist die erste Halteeinrichtung zumindest ein Paar von Klemmbacken auf, zwischen denen die Profilwelle einklemmbar ist. Besonders bevorzugt weist die erste Halteeinrichtung ein Paar von Klemmbacken je Klemmbereich auf. Besonders bevorzugt weisen die Klemmbacken mehrere Klemmprofile auf, die jeweils an ein Außenprofil einer bestimmten Profilwelle angepasst sind. Durch die Bereitstellung angepasster Klemmprofile lässt sich auf die jeweilige Profilwelle vorteilhaft eine hohe Kraft aufbringen, ohne die Oberflächen der Profilwellen zu beschädigen. Gemäß einer bevorzugten Ausführungsform sind die Klemmbacken in einer zu der Längsachse der fixierten Profilwelle rechtwinklig ausgerichteten Ebene verstellbar, insbesondere so verstellbar, dass die verschiedenen Klemmprofile zu der Längsachse der Profilwelle ausgerichtet werden können. Auf diese Weise lassen sich die verschiedenen Klemmprofile besonders einfach und schnell auswählen. Weiterhin bevorzugt sind die Klemmbacken hydraulisch betätigt, insbesondere mittels eines oder mehrerer Tauchkolbenzylinder (Plungerzylinder). Dadurch wird eine besonders sichere Fixierung der Profilwelle in der ersten Halteeinrichtung erreicht.

Gemäß einer bevorzugten Ausführungsform der erfindungsgemäßen Vorrichtung ist die erste Halteeinrichtung entlang der Längsachse der fixierten Profilwelle verstellbar, wobei die zweite Halteeinrichtung in einer zu der Längsachse rechtwinklig ausgerichteten Ebene verstellbar ist. Die zweite Halteeinrichtung ist entlang der Längsachse vorzugsweise nicht beweglich. Dadurch, dass die zweite Halteeinrichtung in der Ebene rechtwinklig zu der Längsachse verstellbar ist, kann diese vorteilhaft genau auf die fixierte Profilwelle ausgerichtet werden. Die zweite Halteeinrichtung weist vorzugsweise Gegenlager auf, welche die Gelenkgabel auf ihrer der ersten Halteeinrichtung zugewandten Seite abstützen. Besonders bevorzugt sind die Gegenlager zur Ausrichtung auf die Längsachse in der Ebene rechtwinklig zu der Längsachse verstellbar. Weiterhin bevorzugt weist die zweite Halteeinrichtung ein Zentriermittel auf, welches eine zentrierte Verschiebung der Gegenlager relativ zueinander ermöglicht. Dies ermöglicht vorteilhaft ein Fixieren der Gelenkgabel zwischen den bereits zu der Längsachse ausgerichteten Gegenlagern. Des Weiteren kann die Gelenkgabel aus den Gegenlagern entfernt werden, während diese weiterhin zu der Längsachse ausgerichtet bleiben. Die Gelenkgabel wird vorzugsweise auf ihrer der ersten Halteeinrichtung abgewandten Seite mit Hilfe von verstellbaren Haltemitteln gegen die Gegenlager verspannt.

Gemäß einer weiteren bevorzugten Ausführungsform der erfindungsgemäßen Vorrichtung weist die zweite Halteeinrichtung mindestens einen Maschinenträger zur Aufnahme eines Werkzeugs auf. Bei dieser Ausführungsform lässt sich vorteilhaft beispielsweise ein Bohrständer an der zweiten Halteeinrichtung anbringen.

Ein weiterer Gegenstand der Erfindung betrifft ein Verfahren zur Montage oder Demontage einer Profilwelle mit bzw. von einer Gelenkgabel einer Kreuzgelenkwelle, wobei das Profilrohr in einer ersten Halteeinrichtung fixiert wird, die Gelenkgabel in einer zweiten Halteeinrichtung aufgenommen wird und
wobei eine der Halteeinrichtungen mittels eines Kraftantriebs entlang einer Längsachse der fixierten Profilwelle auf die andere Halteeinrichtung zu - oder von dieser weg bewegt wird.

Mit dem erfindungsgemäßen Verfahren ist eine im Wesentlichen querkraftfreie Montage und/oder Demontage der Gelenkwelle mit bzw. von der Profilwelle möglich, wodurch vorteilhaft Beschädigungen der Lagersitze vermieden werden.
Die Erfindung wird nachfolgend anhand von Zeichnungen näher erläutert, wobei die

Ausführungen sich sowohl auf die erfindungsgemäße Vorrichtung, als auch auf das erfindungsgemäße Verfahren beziehen. Die dargestellten Ausführungsformen sind lediglich beispielhaft und schränken den allgemeinen Erfindungsgedanken nicht ein.

Es zeigen
- Figur 1: eine schematische Draufsicht einer erfindungsgemäßen Vorrichtung;
- Figur 2: eine schematische Seitenansicht einer ersten Halteeinrichtung der Vor- richtung gemäß Fig. 1;
- Figuren 3a und 3b: schematische Draufsichten der Vorrichtung gemäß Fig. 1 mit ei- ner Gelenkgabel und einer fixierten Profilwelle in demontiertem und in montiertem Zustand;
- Figur 4: eine schematische, perspektivische Ansicht einer zweiten Halteeinrichtung einer erfindungsgemäßen Vorrichtung;
- Figur 5: eine schematische Draufsicht der zweiten Halteeinrichtung der Vorrichtung gemäß Fig. 1 mit Gelenkgabel;
- Figuren 6a, 6b, 7a und 7b: verschiedene Detailansichten von Einzelteilen der zweiten Halteeinrichtung gemäß Fig. 5.

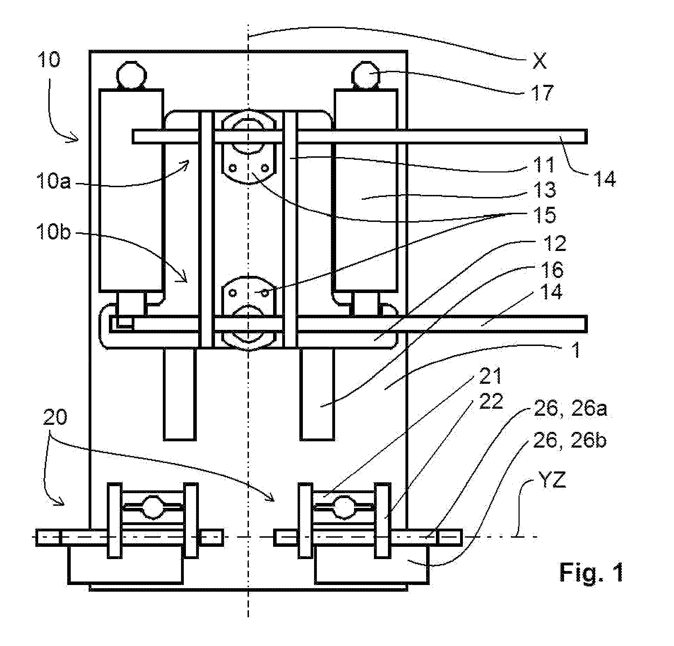

In der Fig. 1 ist eine schematische Ansicht einer erfindungsgemäßen Vorrichtung zur Montage oder Demontage einer Profilwelle mit bzw. von einer Gelenkgabel einer Kreuzgelenkwelle dargestellt. Die Vorrichtung umfasst eine erste Halteeinrichtung 10 und eine zweite Halteeinrichtung 20. Im dargestellten Ausführungsbeispiel sind die erste Halteeinrichtung 10 und die zweite Halteeinrichtung 20 auf einem Grundgestell 1 angeordnet. Die erste Halteinrichtung 10 umfasst einen Schlitten 12, welcher verschiebbar auf Schienen 16 des Grundgestells 1 gelagert ist. Zwei Kolben-Zylinder-Einheiten 13 stützen sich einerseits im Bereich ihrer jeweiligen Abstützungen 17 an dem Grundgestell 1 und andererseits an dem Schlitten 12 ab. In der Darstellung sind im Wesentlichen lediglich die Bauteile auf der rechten Seite mit Bezugszeichen versehen. Dieselben Bezeichnungen gelten entsprechend für die Bauteile auf der linken Seite.

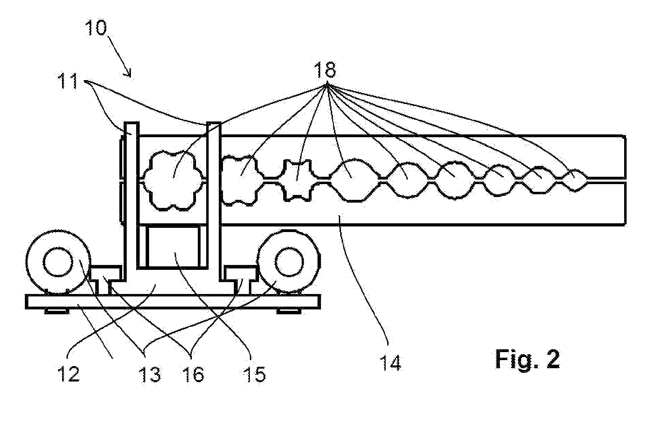

Die erste Halteeinrichtung 10 weist zwei Paare von Klemmbacken 14 auf (siehe auch Figur 2), welche von zwei Aufnahmen 11 getragen werden. Jedem der Klemmbackenpaare 14 ist ein Tauchkolbenzylinder 15 zugeordnet, welcher dazu dient, das jeweilige Klemmbackenpaar 14 gegeneinander zu verspannen. Eine Profilwelle (nicht dargestellt) ist in Richtung der mit X bezeichneten Längsachse zwischen den Klemmbacken 14 aufnehmbar.

Jedes Klemmbackenpaar 14 ist einem der Klemmbereiche 10a, 10b zugeordnet. Dadurch, dass die erste Halteeinrichtung 10 zwei entlang der Längsachse X beabstandet angeordnete Klemmbereiche 10a, 10b aufweist, wird die Profilwelle besonders genau in Richtung der Längsachse X ausgerichtet und fixiert.

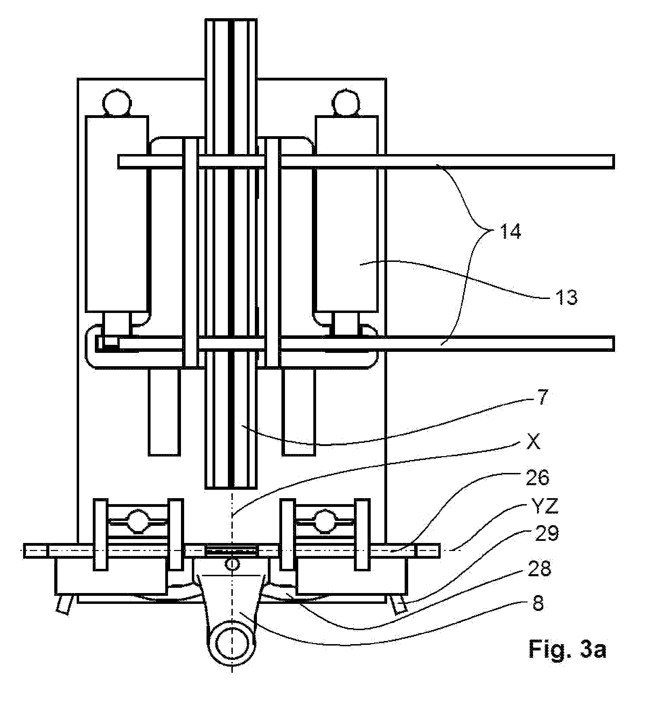

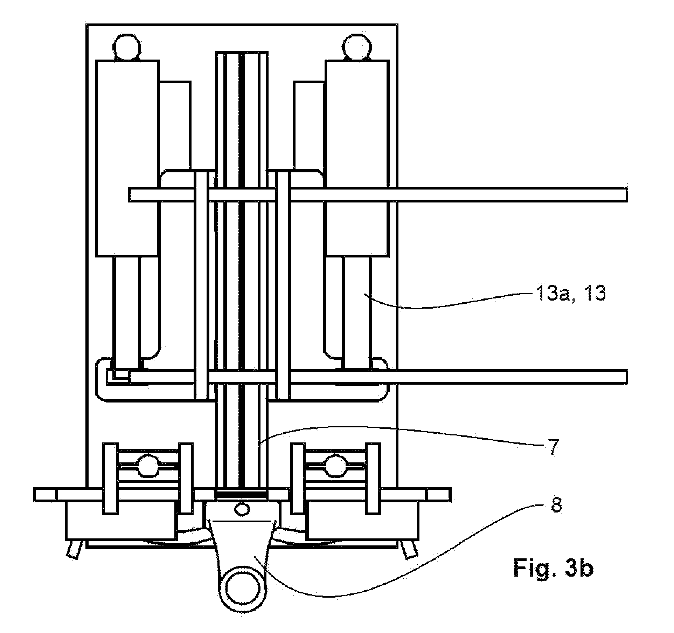

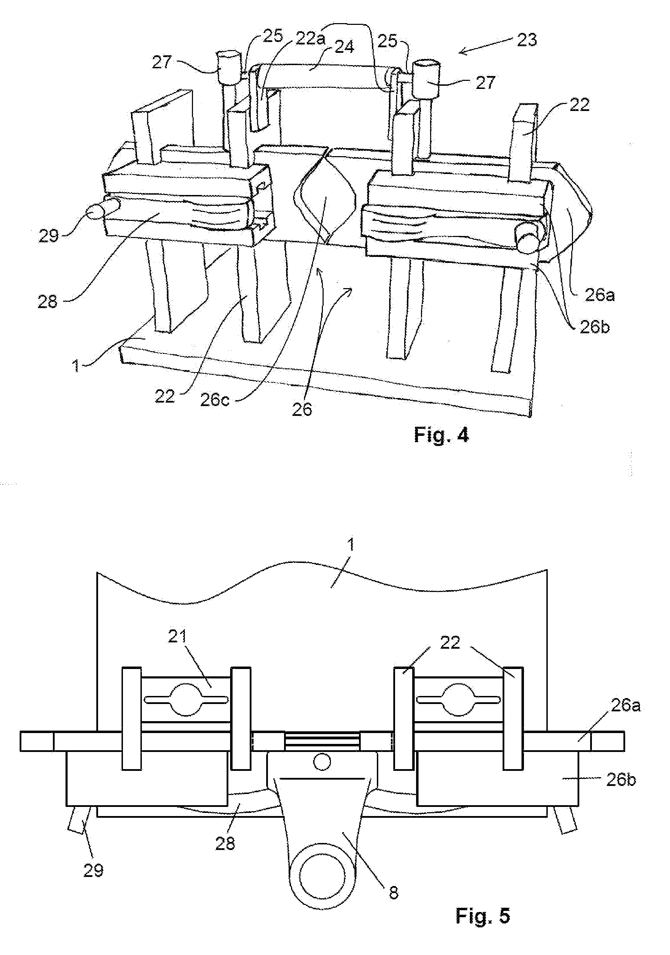

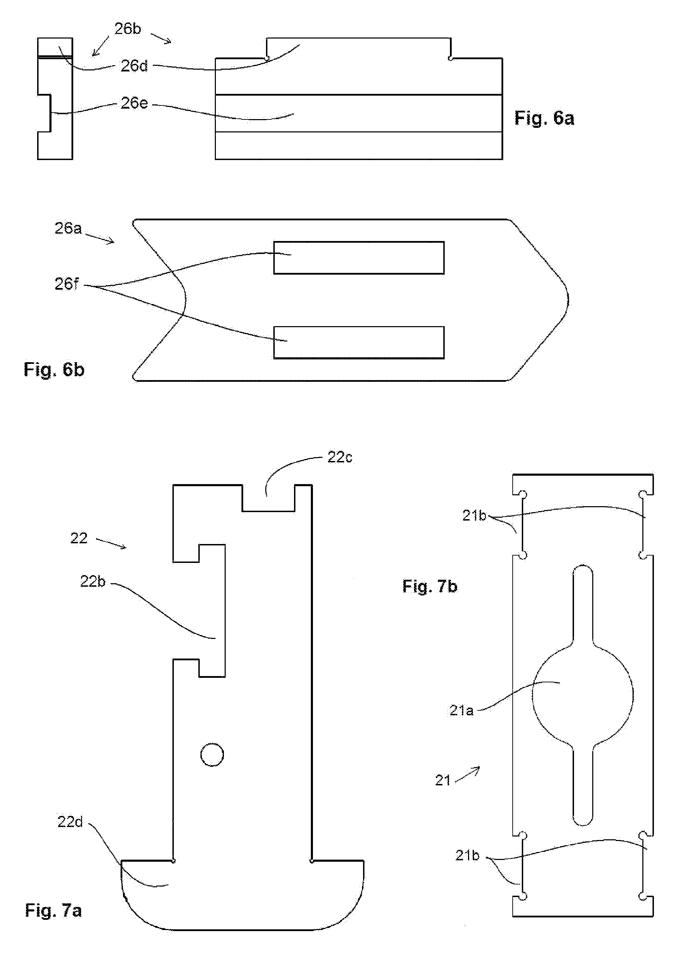

Die zweite Halteeinrichtung 20 weist Gegenlager 26 zur Aufnahme einer Gelenkgabel (nicht dargestellt) auf, wobei die Gegenlager 26 beiderseits der Längsachse X angeordnet sind. Die Gegenlager 26 bestehen beispielsweise jeweils aus einem ersten Schweißteil 26a, welches die Gelenkgabel aufnimmt und aus einem zweiten Schweißteil 26b, auf welches im Zusammenhang mit den Figuren 3 bis 6 eingegangen wird. Die Gegenlager 26 werden getragen von vier Haltern 22, von denen nur der äußerst rechte mit einem Bezugszeichen versehen ist. Die Halter 22 ihrerseits sind mit dem Grundgestell 1 verbunden. Zwischen je zwei Haltern 22 sind Maschinenträger 21 angeordnet, auf die im Zusammenhang mit Figuren 5 und 7 näher eingegangen wird.

Die mit X bezeichnete Längsachse ist eine vorrichtungsfeste Achse und entspricht der Längsachse einer Profilwelle, wenn diese in der erfindungsgemäßen Vorrichtung fixiert ist. Die Begriffe "Längsachse" und "Längsachse der fixierten Profilwelle" werden hier gleichbedeutend genutzt. Die erste Halteeinrichtung 10 ist durch Ausfahren bzw. Einfahren der Kolben-Zylinder-Einheiten 13 entlang der Längsachse X verstellbar. Die Gegenlager 26 sind in den Haltern 22 verschiebbar gelagert, so dass die zweite Halteeinrichtung 20 in einer mit YZ bezeichneten, zur Längsachse X rechtwinkligen Ebene verstellbar ist.

In der Figur 2 ist eine schematische Seitenansicht der ersten Halteeinrichtung 10 dargestellt. Die Schienen 16 des Grundgestells 1 tragen die Aufnahmen 11, welche wiederum die Klemmbackenpaare 14 aufnehmen. Die Klemmbackenpaare 14 sind in der Zeichenebene hintereinander angeordnet, so dass nur eines der Klemmbackenpaare 14 sichtbar ist. Eine Schwierigkeit bei dem Einpressen der Profilwelle 7 besteht darin, die vergleichsweise große Einpresskraft auf die Profilwelle aufzubringen. Da die Profilwellen einer Kreuzgelenkwelle ineinander geführt sind und leichtgängig gegeneinander verschiebbar sein müssen, ist es wichtig, eine Beschädigung der Oberflächen der Profilform der Profilwelle 7 zu vermeiden. Dies wird vorteilhaft dadurch erreicht, dass die Klemmbacken 14 eine Vielzahl verschiedener profilierter Ausnehmungen 18 aufweisen, deren Profil dem Außenprofil jeweils gängiger Profilwellen entspricht. Je nach einzuspannender Profilwelle kann die entsprechende profilierte Ausnehmung 18 durch Verschieben der Klemmbackenpaare 14 zwischen den Aufnahmen 11 angeordnet werden. Die Klemmbackenpaare 14 sind mit jeder der Profilausnehmungen 18 in einer Mittenposition zwischen den Aufnahmen 11 arretierbar. So ist gewährleistet, dass die Profilwelle (nicht dargestellt) auf die Längsachse X (siehe Figur 1) ausgerichtet ist. Die Klemmbackenpaare 14 sind vorzugsweise austauschbar. Der Tauchkolbenzylinder 15 stützt sich einerseits an dem Schlitten 12 ab und verspannt andererseits die Klemmbacken 14 gegeneinander. Die Kolben-Zylinder-Einheiten 16 dienen zur Verschiebung der ersten Halteeinrichtung 10 entlang der Längsachse der fixierten Profilwelle (nicht dargestellt), welche hier senkrecht zur Zeichenebene ausgerichtet ist. Die Kolben-Zylinder-Einheiten 16 sind bevorzugt zweiseitig wirkende Hydraulikzylinder, welche eine kraftbetätigte Bewegung der ersten Halteeinrichtung 10 in zwei entgegen gesetzte Richtungen zum Abziehen und zum Aufpressen der Gelenkgabel erlaubt.

In den Figuren 3a und 3b ist die erfindungsgemäße Vorrichtung mit einer darin fixierten Profilwelle 7 und mit einer Gelenkgabel 8 dargestellt. Die Figur 3a zeigt die Profilwelle 7 und die Gelenkgabel 8 in demontiertem Zustand, in der Figur 3b sind die Profilwelle 7 und die Gelenkgabel 8 in montiertem Zustand dargestellt. Die Montage der Profilgabel 8 erfordert ein hohes Maß an Präzision. Bei einer herkömmlichen Hammermontage oder -demontage können beispielsweise Lagersitze und Passungen der Profilgabel 8 beschädigt werden.

In der Figur 3a sind die Kolben-Zylinder-Einheiten 13 im wesentlichen vollständig eingefahren. Beim Ausfahren der Kolben-Zylinder-Einheiten 13 wird die Gelenkgabel 8 in der Ebene YZ auf die Profilwelle 7 zentriert, so dass diese gerade in die Gelenkgabel 8 eingeführt werden kann. Die Gelenkgabel 8 wird durch Haltemittel 28 fest in den Gegenlagern 26 gehalten. Durch eine trapezförmige Aufnahme der Gegenlager 26 und ein Zentriermittel (nicht dargestellt) wird eine genaue Flucht der Gelenkgabel 8 zu der Profilwelle 7 sichergestellt, wie im Zusammenhang mit den Figuren 4 bis 6 näher erläutert wird.

In der Figur 3b ist die Gelenkgabel 8 auf der Profilwelle 7 montiert dargestellt. Durch Ausfahren der Hydraulikkolben 13a der Kolben-Zylinder-Einheiten 13 wird die zum Aufpressen der Gelenkgabel 8 notwendige Kraft aufgebracht. Durch die vorzugsweise in zwei Richtungen betätigbaren Kolben-Zylinder-Einheiten 13 lassen sich die Zylinderkolben 13a ebenso kraftbetätigt wieder einziehen, wodurch vorteilhaft ein Abziehen der in dem Gegenlager 26 gelagerten Gelenkgabel 8 von der Profilwelle 7 ermöglicht wird.

In der Figur 4 ist eine schematische perspektivische Ansicht der zweiten Halteeinrichtung 20 (vgl. Figur 1) dargestellt. Auf der Grundplatte 1 sind vier Halter 22 angeordnet, in denen die Gegenlager 26 in der Ebene XY (vgl. Figur 1) verschiebbar aufgenommen sind. Jedes Gegenlager 26 besteht aus einem ersten Schweißteil 26a, welches mit zwei zweiten Schweißteilen 26b verschweißt ist. Die zweiten Schweißteile 26b weisen Nutaufnahmen 26e (vgl. Figur 6a) auf, in welchen die Haltemittel 28 verschiebbar geführt sind. Die Haltemittel 28 lassen sich so an eine in dem Gegenlager 26 aufgenommene Gelenkgabel (nicht dargestellt) anpassen, um diese in dem Gegenlager 26 zu halten. Stellmittel 29 dienen dazu, die Haltemittel 28 in einer beliebigen Position entlang der Nutaufnahmen 26e der zweiten Schweißteile 26b zu fixieren. Die nicht dargestellte Gelenkgabel wird einerseits von der rautenförmigen Gegenlageröffnung 26c und andererseits von den Haltemitteln 28 fixiert. Die Gegenlager 26 sind prinzipiell in der Ebene YZ verschiebbar.

Die relative Position der Gegenlager 26 zueinander wird durch ein Zentriermittel 23 sichergestellt. Das Zentriermittel 23 ist über jeweilige Stifte 25 und Verbindungen 27 mit beiden Gegenlagern 26 verbunden. Die zwei Stifte 25 sind mit zueinander gegenläufigen Gewinden versehen, welche in entsprechende Innengewinde einer Hülse 24 eingeschraubt sind. Ein Drehen der zwischen den Lagern 22a angeordneten Hülse 24 führt dementsprechend dazu, dass die Gegenlager 26 über die Verbindungen 27 sich symmetrisch zueinander gegenläufig zu bewegen. Dadurch wird eine Gelenkgabel in dem Gelenklager 26 vorteilhaft automatisch zentriert. Eine Relativbewegung der Gelenkgabel zur Profilwelle ist somit in der XY-Ebene nach dem Einspannen nicht mehr möglich. So kann beispielsweise vorteilhaft eine abgezogene Gelenkgabel aus den Gegenlagern 26 entnommen werden und durch eine neue Gelenkgabel ersetzt werden, ohne dass die Zentrierung der Gegenlager 26 auf die Längsachse X der fixierten Profilwelle (nicht dargestellt) verloren geht.

In der Figur 5 ist eine weitere Detailansicht der zweiten Halteeinrichtung 20 (vgl. Figur 1) dargestellt. Von den auf dem Grundgestell 1 montierten Haltern 22 sind lediglich zwei mit Bezugszeichen versehen. Zwischen jeweils zwei Haltern 22 ist ein Maschinenträger 21 angeordnet, auf den im Zusammenhang mit der Figur 7 noch näher eingegangen wird. Zur Verbesserung der Übersichtlichkeit ist das Zentriermittel 23 (vgl. Figur 4) nicht dargestellt. Die Gelenkgabel 8 ist zwischen den ersten Schweißteilen 26a der Gegenlager 26 aufgenommen und wird von den Haltemitteln 28 in ihrer Position gehalten. Die Haltemittel 28 sind ihrerseits in den zweiten Schweißteilen 26b der Gegenlager 26 geführt und werden durch die Stellmittel 29 in ihrer Position gehalten.

In den Figuren 6a und 6b sind die zweiten Schweißteile 26b und ersten Schweißteile 26a der Gegenlager 26 im Detail dargestellt. Jedes der zweiten Schweißteile 26b weist eine Nutaufnahme 26e für die Haltemittel 28 (vgl. Figur 5) auf. Im montierten Zustand weisen jeweils zwei dieser Nutaufnahmen 26e zueinander. Eine Ausformung 26d der zweiten Schweißteile 26b ist dazu vorgesehen, in eine der Ausnehmungen 26f des ersten Schweißteils 26a aufgenommen zu werden. Danach erfolgt ein Verschweißen des ersten Schweißteils 26a mit zwei der zweiten Schweißteile 26b zu einem Gegenlager 26.

In der Figur 7a ist einer der Halter 22 im Detail dargestellt. Der Halter 22 weist einen Fuß 22b auf, welcher sich unterhalb des Grundgestells 1 (vgl. Figur 4) abstützt und dort beispielsweise verschweißt ist. Der Halter 22 weist eine Aufnahme 22b für das Gegenlager 26 (vgl. Figur 1) auf, worin das Gegenlager 26 in der Ebene YZ verschiebbar ist. An seiner Oberseite weist der Halter 22 eine Aufnahme 22c für den Maschinenträger 21 auf, welcher in der Figur 7b im Detail dargestellt ist. Der Maschinenträger 21 weist Montagenuten 21 b auf, mit welchen der Maschinenträger 21 in den Aufnahmen 22c des Halters 22 (vgl. Figur 7a) aufnehmbar ist. Die Maschinenträger 21 werden vorzugsweise mit den Haltern 22 verschweißt. Der Maschinenträger 21 weist eine Maschinenaufnahme 21 a auf, die beispielsweise mittels Schrauben (nicht dargestellt) verspannt werden kann. In dem Maschinenträger 21 lässt sich beispielsweise vorteilhaft eine Bohrstütze mit Bohrmaschinenaufnahme befestigen, wodurch beispielsweise direkt nach dem Einpressen der Profilwelle in die Gelenkgabel eine Bohrung für einen Sicherungsstift hergestellt werden kann.

### Bezugszeichenliste

- 1: Grundgestell
- 7: Profilwelle
- 8: Gelenkgabel
- 10: Erste Halteeinrichtung
- 10a, 10b: Klemmbereiche
- 11: Aufnahme
- 12: Schlitten
- 13: Kolben-Zylinder-Einheit
- 14: Klemmbackenpaare
- 15: Tauchkolbenzylinder
- 16: Schienen
- 17: Abstützung
- 18: Profilierte Ausnehmungen
- 20: Zweite Halteeinrichtung
- 21: Maschinenträger
- 21 a: Maschinenaufnahme
- 21 b: Montagenuten
- 22: Halter
- 22a: Lager für Zentriermittel
- 22b: Aufnahme für Gegenlager
- 22c: Aufnahme für Maschinenträger
- 22d: Fuß
- 23: Zentriermittel
- 24: Hülse
- 25: Stift
- 26: Gegenlager
- 26a: Erste Schweißteile
- 26b: Zweite Schweißteile
- 26c: Rautenförmige Gegenlageröffnung
- 26d: Ausformung
- 26e: Nutaufnahme für Haltemittel
- 26f: Ausformung
- 27: Verbindung
- 28: Haltemittel
- 29: Stellmittel
- X: Längsachse
- YZ: Ebene

## Patentansprüche

1. Vorrichtung zur Montage oder Demontage einer Profilwelle (7) mit bzw. von einer Gelenkgabel (8) einer Kreuzgelenkwelle, umfassend
eine erste Halteeinrichtung (10) zur fixierenden Aufnahme der Profilwelle , eine zweite Halteeinrichtung (20) zur Aufnahme der Gelenkgabel,
einen Kraftantrieb (13),
wobei zumindest eine der Halteeinrichtungen mittels des Kraftantriebs entlang einer Längsachse (X) der fixierten Profilwelle relativ zu der anderen Halteeinrichtung verstellbar ist.

2. Vorrichtung nach Patentanspruch 1,
**dadurch gekennzeichnet,**
**dass** die erste Halteeinrichtung (10) zumindest zwei Klemmbereiche (10a, 10b) aufweist, wobei die Klemmbereiche entlang der Längsache (X) voneinander beabstandet sind.

3. Vorrichtung nach einem der vorhergehenden Patentansprüche,
**dadurch gekennzeichnet,**
**dass** die zumindest eine verstellbare Halteeinrichtung (10) auf einem Schlitten (12) angeordnet ist, der an einem Grundgestell (1) verschiebbar geführt ist.

4. Vorrichtung nach Patentanspruch 3,
**dadurch gekennzeichnet,**
**dass** zumindest eine Kolben-Zylinder-Einheit als Kraftmittel (13) vorgesehen ist, die einerseits gegen den Schlitten (12) und andererseits gegen das Grundgestell (1) abgestützt ist.

5. Vorrichtung nach einem der vorhergehenden Patentansprüche,
**dadurch gekennzeichnet,**
**dass** die erste Halteeinrichtung (10) zumindest ein Paar von Klemmbacken (14) aufweist, zwischen denen die Profilwelle (7) einklemmbar ist, wobei die Klemmbacken (14) an ein Außenprofil der Profilwelle (7) angepasst sind.

6. Vorrichtung nach Patentanspruch 5,
**dadurch gekennzeichnet,**
**dass** eines oder mehrere Paare von Klemmbacken (14) jeweils mittels eines Tauchkolbenzylinders (15) lösbar gegeneinander verspannbar sind.

7. Vorrichtung nach einem der Patentansprüche 5 oder 6,
**dadurch gekennzeichnet,**
**dass** die Klemmbacken (14) mehrere Klemmprofile (18) aufweisen, die jeweils an ein Außenprofil einer bestimmten Profilwelle (7) angepasst sind.

8. Vorrichtung nach einem der Patentansprüche 5 bis 7,
**dadurch gekennzeichnet,**
**dass** die Klemmbacken (14) in einer zur Längsachse (X) der fixierten Profilwelle (7) rechtwinklig angeordneten Ebene verstellbar sind.

9. Vorrichtung nach einem der vorhergehenden Patentansprüche,
**dadurch gekennzeichnet,**
**dass** die erste Halteeinrichtung (10) entlang der Längsachse (X) verstellbar ist, wobei die zweite Halteeinrichtung (20) in einer zu der Längsachse rechtwinkligen Ebene (YZ) verstellbar ist.

10. Vorrichtung nach einem der vorhergehenden Patentansprüche,
**dadurch gekennzeichnet,**
**dass** die zweite Halteeinrichtung (20) ein Zentriermittel (23) aufweist, wobei das Zentriermittel zur Ausrichtung von Gegenlagern (26) zu der Längsachse (X) dient.

11. Vorrichtung nach einem der vorhergehenden Patentansprüche,
**dadurch gekennzeichnet,**
**dass** die zweite Halteeinrichtung (20) mindestens einen Maschinenträger (21) zur Aufnahme eines Werkzeugs aufweist.

12. Verfahren zur Montage oder Demontage einer Profilwelle mit einer Gelenkgabel einer Kreuzgelenkwelle,
wobei das Profilrohr in einer ersten Halteeinrichtung fixiert wird, die Gelenkgabel in einer zweiten Halteeinrichtung aufgenommen wird und
wobei eine der Halteeinrichtungen mittels eines Kraftantriebs entlang einer Längsachse der fixierten Profilwelle auf die andere Halteeinrichtung zu - oder von dieser weg bewegt wird.
